# EUROPÄISCHE PATENTSCHRIFT

(11) **EP 2 001 778 B1**
(45) Veröffentlichungstag und Bekanntmachung des Hinweises auf die Patenterteilung: **24.02.2010**
(21) Anmeldenummer: 07787127.5
(22) Anmeldetag: 05.07.2007
(51) Int. Cl.: B65G 49/06, C03B 33/03

(54) **HALTEVORRICHTUNG ZUM FIXIEREN EINES SUBSTRATES**
HOLDING DEVICE FOR FIXING A SUBSTRATE
DISPOSITIF DE RETENUE POUR LA FIXATION D'UN SUBSTRAT

(30) Priorität: 12.07.2006 DE 102006032185
(43) Veröffentlichungstag der Anmeldung: 17.12.2008
(73) Patentinhaber: Schott AG, 55122 Mainz (DE)
(72) Erfinder: KURZ, Martin, 61476 Kronberg (DE); GRAHL, Thorsten, 63776 Mömbris (DE); ANGERMANN, Martin, 61476 Kronberg (DE); MACKINTOSH, Brian, Concord, Massachusetts 01742 (US)
(74) Vertreter: Weiss, Christian
(86) Internationale Anmeldenummer: PCT/EP2007/056838
(87) Internationale Veröffentlichungsnummer: WO 2008/006770

(56) Entgegenhaltungen:
- WO-A-2005/087631
- DE-A1-102004 025 781
- DE-B- 1 058 432
- GB-A- 2 036 842
- JP-A- 10 180 671
- US-A- 5 059 088

## Beschreibung

Die Erfindung betrifft eine Haltevorrichtung, insbesondere zum Fixieren eines Substrates während eines Bearbeitungsprozesses, umfassend ein Gehäuse und einen gegenüber dem Gehäuse in seiner axialen Richtung verschiebbar gelagerten Stößel mit einem ersten und einem zweiten Endabschnitt, wobei der erste Endabschnitt aus dem Gehäuse herausragt und einen Vakuumsauger aufweist.

Derartige Haltevorrichtungen kommen insbesondere bei bruchempfindlichen Substraten, beispielsweise Glassubstraten, mit geringer Materialstärke zum Einsatz. Ein typisches Anwendungsgebiet ist die Herstellung von Wafern, bei denen ein rohrförmiger oder plattenartiger dünner Glaskörper in radialer Richtung mittels einer Schneidvorrichtung getrennt wird. Nach dem Trennvorgang ist es wichtig, dass die abgetrennten Segmente gehalten werden und nachfolgend ohne Beschädigungen weiter transportiert werden können.

Aus der JP 10180671 und der US 2004/0195850 sind Haltevorrichtungen mit mehreren daran angeordneten Stößeln bekannt, die jeweils endseitig einen Vakuumsauger tragen. In einer Ausgangsstellung werden die Stößel über eine Druckfeder in eine vordere Endlage gedrückt. Bei Annäherung an das nicht ideal ebene Substrat werden die Stößel individuell eingefedert. Bedingt durch die zunehmende Federkraft beim Eindrücken der Stößel ist die auf das Substrat wirkende Druckkraft nicht konstant, sondern steigt entsprechend der Federkennlinie an. Selbst bei Verwendung äußerst weicher Federn können die auftretenden Druckkräfte ein Brechen des Substrats zur Folge haben. Auch hinsichtlich des Ziels dünnere Substrate zu bearbeiten, ist eine Optimierung der bestehenden Anlagen notwendig.

Die DE 10 2004 025781 A1 beschreibt einen Stößel, der mittels Gleitdichtungen innerhalb der Kolben-Zylinder-Einrichtung in einem freien Einbauraum gelagert ist, wobei der Einbauraum über einen Anschluss mit einem Unterdruck beaufschlagt wird. Der Stößel ist durch den Unterdruck in seiner axialen Richtung verfahrbar. Auch mit dieser bekannten Vorrichtung lässt sich keine hubunabhängige Stößelkraft für eine Annäherung an besonders empfindliche Substrate einstellen.

Demzufolge lag der Erfindung die Aufgabe zugrunde, eine Haltevorrichtung derart weiterzuentwickeln, dass sowohl eine nahezu kraftfreie Annäherung als auch eine kraftfreie Fixierung des Substrates möglich ist.

Eine weitere Teilaufgabe bestand darin, mehrere der erfindungsgemäßen Haltevorrichtungen besonders günstig auf einer gemeinsamen Trägerplatte anzuordnen.

Die Aufgabe wird erfindungsgemäß mit einer Haltevorrichtung gelöst, bei welcher der Stößel gasgefedert in dem Gehäuse gelagert ist. Der Stößel stellt dabei einen frei fliegenden Kolben in einem durch das Gehäuse gebildeten Zylinder dar. Durch die Wahl eines definierten Drucks im Gehäuse ist eine exakte, hubunabhängige Stößelkraft einstellbar. Dieses wird konstruktiv dadurch ermöglicht, dass sich der zweite Endabschnitt des Stößels innerhalb des Gehäuses stets in einer einzigen Druckkammer befindet. Der Stößel ist dabei beabstandet zu der Wandung der Druckkammer angeordnet, so dass der in der Druckkammer eingestellte Druck allseitig auf den Stößel wirkt. Die Gasfederung kann beispielsweise über eine in dem Gehäuse mit einem Druckmedium beaufschlagbare Druckkammer realisiert sein, wobei das Druckmedium auf den zweiten Endabschnitt des Stößels wirkt.

In einer bevorzugten Ausführungsform ist die Druckkammer mit einer Druckleitung verbunden und in der Druckleitung ein Proportionalventil angeordnet. Derartige Proportional-Druckventile sind stetig arbeitende Ventile, deren pneumatische Ausgangsgröße proportional einem elektrischen Eingangssignal ist und die in der Regel durch einen Proportionalmagneten betätigt werden. Mit Proportionalventilen ist eine Einstellung der Schaltwege mit stetigem Übergang möglich. Der jeweilige Ansprechdruck kann mittels eines elektrischen Signals vorgegeben werden.

Mit Hilfe des Proportionalventils erfolgt die Druckeinstellung in der Druckkammer und dadurch ein konstanter Kraftverlauf beim Ein- und Ausfahren des Stößels über den gesamten Stößelhub. Darüber hinaus ermöglicht das Proportionalventil ein Einstellen verschiedener Drücke oder Druckstufen, so dass für unterschiedliche Prozessschritte unterschiedliche Stößelkräfte möglich sind.

Vorzugsweise ist das Fixierelement als Vakuumsauger ausgebildet. Der Vakuumsauger arbeitet mit einem Unterdruck und hält dadurch Glassubstrat kraftschlüssig fest.

Es hat sich konstruktiv als besonders günstig erwiesen, wenn der Stößel eine in das Fixierelement beziehungsweise den Vakuumsauger mündende Axialbohrung und die Axialbohrung mindestens eine radiale Bohrung aufweist, wobei in dem Gehäuse der mindestens einen radialen Bohrung gegenüberstehend ein aufgeweiteter Ringraum ausgebildet und der Ringraum mit einem Vakuumkanal verbunden ist. Der zum Ansaugen des Substrates an den Vakuumsauger notwendige Unterdruck wird über die Bohrungen aus dem stehenden Gehäuse auf den beweglichen Stößel übertragen. Dadurch kann bei dieser Ausführungsform auf einen Vakuumschlauch verzichtet werden. Der Vakuumschlauch ist konstruktiv bedingt gebogen und weist federartige Eigenschaften auf, die dem Stößel vergleichbar einer Druckfeder eine Vorzugsrichtung vorgibt. Der Stößel kann gemäß der vorgeschlagenen Ausführungsform unbeeinflusst durch fremdinduzierte Kräfte der Vorrichtung wie zum Beispiel Druckfeder oder Vakuumschlauch sich der tatsächlichen Form des anzusaugenden Substrates anpassen, wodurch die zugrunde liegende Aufgabe noch optimaler gelöst wird. Nach der Substratfixierung an dem Fixierelement erfolgt insbesondere zusammen mit der Anwahl verschiedener Druckniveaus über das Proportionalventil eine für das Produkt annähernd spannungsfreie Fixierung. Bei besonderen Anwendungen kann das Druckniveau bis auf drucklos reduziert werden.

Vorteilhafterweise ist der Vakuumkanal an eine Vakuumpumpe angeschlossen.
Der Stößel kann gegenüber dem Gehäuse mit einem Magnetlager gelagert sein. Hierdurch erfolgt eine besonders reibungsarme Lagerung.

Alternativ hierzu ist es auch möglich, den Stößel gegenüber dem Gehäuse mit einem Luftlager zu lagern. Unter einem Luftlager wird ein poröses Material beispielsweise aus Grafit verstanden, welches in axialer Richtung den Stößel umgibt und mit Druckluft beaufschlagt wird. Die Luftlagerung stellt einerseits den annähernd reibungsfreien Lauf des Stößels sicher und erhöht andererseits die Steifigkeit des Stößels bezüglich auftretender Querkräfte.

Günstigerweise ist das Luftlager über eine eigene Druckluftversorgung beaufschlagt. Um einen störungsfreien Lauf der Lagerung auch über lange Zeiträume zu gewährleisten, sollte die Druckluftversorgung des Luftlagers mit aufbereiteter, das heißt gereinigter und getrockneter Luft erfolgen.

Vorzugsweise grenzt das Luftlager mit einer Seite an die Druckkammer an. Hierdurch resultiert der Vorteil, dass ein geringer Teil des Druckluftstroms aus der Luftlagerung in die Druckkammer abströmen kann. Bei besonders empfindlichen Substraten kann der dadurch in der Druckkammer vorherrschende Überdruck schon ausreichen, den Stößel mit äußerst geringer Kraft in der ausgeschobenen Ausgangsstellung zu halten ohne einen weiteren Druckluftstrom in die Druckkammer einzuleiten.

Auch hat es sich als vorteilhaft erwiesen, wenn das Luftlager eine größere axiale Länge aufweist als der Hubweg des Stößels. Dieses erhöht besonders die Eigenschaft auch hohe Querkräfte aufzunehmen.

In einer bevorzugten Ausgestaltung ist die Position des Stößels über eine Stößelpositionserkennung erfasst. Die Stößelpositionserkennung kann beispielsweise einen in der Druckkammer angeordneten Sensor umfassen, welcher den zweiten Endabschnitt des Stößels detektiert. Mit Hilfe der Stößelpositionsabfrage wird festgestellt, ob eine Kontaktierung zwischen Stößel und Substrat erfolgreich war. Des Weiteren findet eine Ausschnittskontrolle hinsichtlich des Schnittes durch das Substrat statt, da nur bei vollständiger und fehlerfreier Durchtrennung des Substrates die Stößel beim Herausfahren in die Ausgangsstellung ihre detektierte Endlage erreichen.

Günstigerweise ist in dem Gehäuse quer zur axialen Ausrichtung des Stößels ein Stellzylinder angeordnet, welcher in einer ausgefahrenen Position an den Stößel angreift. Der Stellzylinder wirkt in der ausgefahrenen Position als Stößelbremse und fixiert diesen in axialer Bewegungsrichtung. Hierzu können an dem Stellzylinder und/oder Stößel zusätzliche formschlüssige Elemente ausgebildet sein.

Die Teilaufgabe wird durch ein Haltesystem mit mehreren der erfindungsgemäßen Haltevorrichtungen in einer gemeinsamen Trägerplatte gelöst, wobei die Stößel jeweils gasgefedert in dem Gehäuse gelagert sind.

Die Trägerplatte kann einen mit Vakuumkanälen verbundenen Vakuumsammelkanal aufweisen, welcher an eine gemeinsame Vakuumpumpe angeschlossen ist. Hierdurch ergibt sich ein besonders kompakter modularer Systemaufbau. Die Vakuumkanäle und/oder der Vakuumsammelkanal durchsetzen die Trägerplatte oder das Gehäuse vorzugsweise als Bohrungen.

Zum besseren Verständnis wird die Erfindung nachfolgend anhand von vier Figuren näher erläutert. Dabei zeigen die:
- **Fig. 1:**: eine Seitenansicht auf ein Haltesystem mit Trägerplatte und sechs sichtbaren Haltevorrichtungen;
- **Fig. 2:**: einen Querschnitt entlang der Linie A:A in Fig. 1;
- **Fig. 3:**: eine perspektivische Ansicht gemäß Fig. 1 und
- **Fig. 4:**: eine perspektivische Ansicht auf ein System mit Trägerplatte und 12 Haltevorrichtungen in Einbauposition.

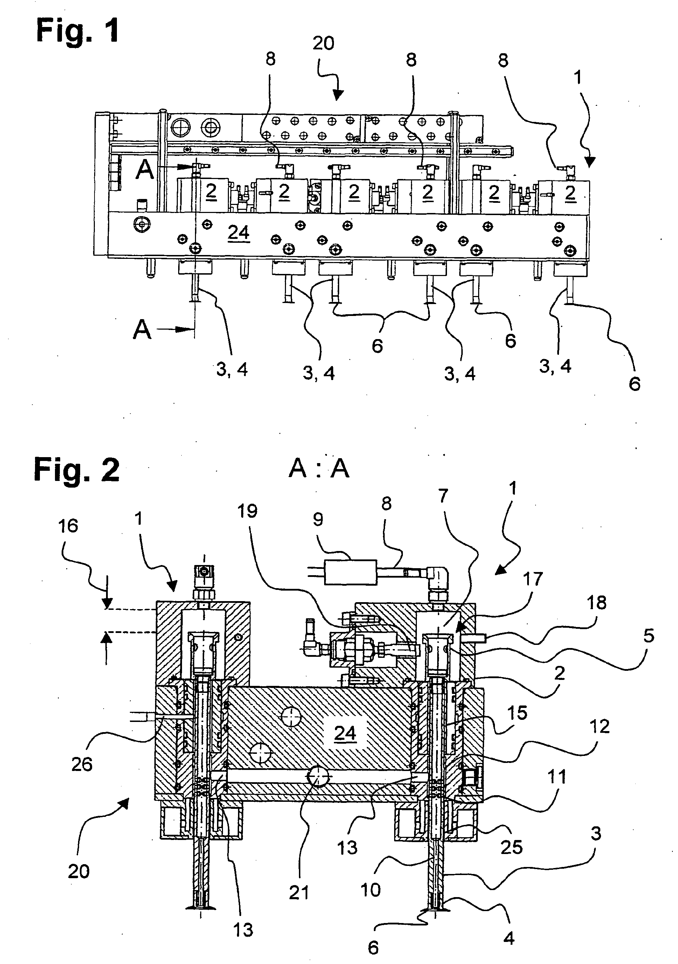

Die Figur 1 zeigt eine Seitenansicht auf ein Haltesystem 20 mit einer Trägerplatte 24, in der insgesamt zwölf Haltevorrichtungen 1 eingesetzt sind. Aufgrund der symmetrischen Anordnung der Haltevorrichtungen 1 sind in der Figur 1 nur sechs Haltevorrichtungen 1 sichtbar.

Die Haltevorrichtungen 1 des Haltesystems 20 umfassen jeweils ein Gehäuse 2, welches oberhalb und unterhalb der Trägerplatte 24 vorsteht, sowie einen aus dem Gehäuse 2 ragenden Stößel 3. An dem ersten Endabschnitt 4 des Stößels 3 ist ortsfest ein Vakuumsauger 6 zur Kontaktierung mit einem nicht gezeigten Substrat angeordnet. In dem gezeigten ausgefahrenen Zustand der Stößel 3 befinden sich alle Vakuumsauger 6 des Haltesystems 20 in einer Ebene, wobei sich die Stößel 3 bei Annäherung des Substrates entsprechend der Formgebung der Oberfläche des Substrates durch Einschieben in das jeweilige Gehäuse 2 anpassen.

An jedem Gehäuse 2 stehen auf der Oberseite Druckleitungen 8 empor, welche an eine ebenfalls nicht gezeigte
Druckluftversorgungseinrichtung angeschlossen werden können.

Die Figur 2 stellt einen Querschnitt längs der Schnitteben A:A in Figur 1 dar, in der besonders gut die benachbarte Anordnung zweier identisch aufgebauter Haltevorrichtungen 1 zu erkennen ist. Jede Haltevorrichtung 1 weist eine einzige Druckkammer 7 auf, welche über die Druckleitung 8 und ein darin angeordnetes Proportionalventil 9 mit Druckluft beaufschlagbar ist. Unter der Druckkammer 7 wird ein abgegrenzter Bauraum mit einem einheitlichen Druckniveau verstanden. Ausgehend von der Druckkammer 7 durchsetzt das Gehäuse 2 eine zylindrische Bohrung 25, die axial verschiebbar den Stößel 3 aufnimmt.

Der Stößel 3 ist über einen Großteil seiner axialen Länge von der zylindrischen Bohrung 25 geführt. Lediglich der erste Endabschnitt 4 befindet sich außerhalb der Bohrung 25 beziehungsweise außerhalb des Gehäuses 2 und nimmt endseitig den Vakuumsauger 6 auf, wobei der erste Endabschnitt 4 für eine formschlüssige Verbindung mit dem Vakuumstößel 6 eine Hinterschneidung aufweisen kann. Ein zweiter Endabschnitt 5 befindet sich auch bei vollständig ausgefahrenem Stößel 3 in der Druckkammer 7. Der verbleibende freie Bauraum in der Druckkammer 7 oberhalb des zweiten Endabschnitts 5 entspricht dem maximalen Hubweg 16 des Stößels 3. Der zweite Endabschnitt 5 ist in radialer Richtung beabstandet zu der Innenwand der Druckkammer 7 angeordnet.

Vor einer Annäherung eines nicht gezeigten Substrates an die jeweiligen Haltevorrichtungen 1 werden die Druckkammern 7 mit einem einstellbaren Druckniveau beaufschlagt, wobei dieses bei besonders empfindlichen Substraten auch dem Umgebungsdruck entsprechen kann. Die Stößel 3 werden entsprechend der Oberflächenform kontaktiert und eingeschoben. Dabei setzten die Stößel 3 dem Substrat aufgrund eines in der zylindrischen Bohrung eingebrachten Luftlagers 15 nur einen äußerst geringen Reibungswiderstand entgegen. Das Luftlager 15 wird über einen eigenen Luftlagerversorgungskanal 26 mit gereinigter Druckluft versorgt. Durch die feinporöse Struktur des Luftlagers 15 kann jedoch ein Teil der Druckluft aus dem Luftlager 15 in die Druckkammer 7 eintreten und dort für eine sehr geringe Druckerhöhung trotz geschlossener Druckleitung 8 sorgen. Dieser Effekt wird besonders bei empfindlichen Substraten ausgenutzt.

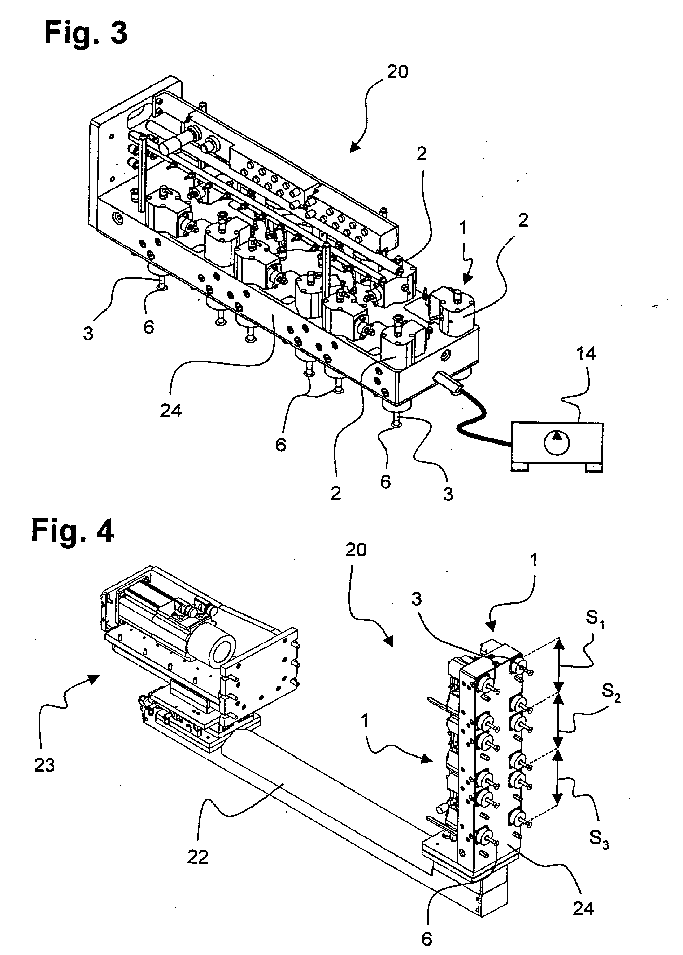

Während des Kontaktierens der Vakuumsauger 6 mit dem Substrat wird über eine außerhalb des Haltesystems 20 angeordnete Vakuumpumpe 14 (siehe Figur 3) ein in der Trägerplatte 24 eingebrachter Vakuumsammelkanal 21 mit einem Unterdruck beaufschlagt. Der Vakuumsammelkanal 21 steht mit Vakuumkanälen 13 der Gehäuse 2 in Verbindung, wobei diese bis in die zylindrische Bohrung 25 hineinreichen. In diesem Abschnitt weist die zylindrische Bohrung 25 einen aufgeweiteten Ringraum 12 auf. Die axiale Erstreckung des aufgeweiteten Ringraumes 12 ist derart ausgebildet, dass unabhängig von der Position des Stößels, stets mindestens eine der mehreren in dem Stößel 3 eingearbeiteten radialen Bohrungen 11 von dem aufgeweiteten Ringraum 12 erfasst ist und dadurch einen Fließweg freigibt. Der Stößel 3 ist rohrförmig mit einer Axialbohrung 10 ausgebildet und an dem zweiten Endabschnitt 5 verschlossen. Dadurch setzt sich der Unterdruck bis zu dem am ersten Endabschnitt 4 angeordneten Vakuumsauger 6 fort.

Die Position des Stößels 3 bezüglich des Gehäuses 2 wird über eine Stößelpositionserkennung 17 erfasst, welche im Wesentlichen einen an der Druckkammer 7 angeordneten Sensor 18 umfasst, der induktiv ein Ausgangssignal bei Annäherung des zweiten Endabschnitts 5 abgibt. Der zweite Endabschnitt 5 ist hierfür mit einer tellerartigen Durchmessererweiterung versehen.

Es ist auch möglich den Verfahrweg des Stößels 3 zu blockieren. Dieses erfolgt mittels eines pneumatisch ansteuerbaren Stellzylinders 19, der in seiner ausgefahrenen Position gegen den zweiten Endabschnitt 5 des Stößels 3 stößt und dadurch ein Verschieben des Stößels 3 in seiner axialen Richtung verhindert.

Die Figuren 3 und 4 zeigen das erfindungsgemäße Haltesystem 20 in perspektivischen Ansichten. Wie in Figur 4 zu erkennen ist, steht das Haltesystem 20 in Einbauposition weit gehend vertikal auf einem Auslegerarm 22, der an seinem entgegen gesetzten Ende eine Antriebseinheit 23 trägt. Das Substrat, beispielsweise Glasrohre, werden für einen Zuschnitt von oben auf das Haltesystem 20 derart aufgesetzt, dass die Haltevorrichtungen 1 innerhalb des Substrates beziehungsweise Glasrohres angeordnet sind. Die Stößel 3 kontaktieren dann über die Vakuumsauger 6 die Wandung von der Innenseite. In kontaktiertem Zustand erfolgt der Schneidvorgang üblicherweise mit Hilfe eines Lasers. Ein Schnittabstand S₁, S₂, S₃ ist als gestrichelte Linie in Figur 4 eingezeichnet. Bei diesem vorgesehenen Schnittabstand S₁, S₂, S₃ tragen nach dem Schneidvorgang jeweils vier Haltevorrichtungen 1 ein abgetrenntes Segment des Substrates bis zur Übergabe an ein weiteres Fördermittel.

### Bezugszeichenliste

- 1: Haltevorrichtung
- 2: Gehäuse
- 3: Stößel
- 4: erster Endabschnitt Stößel
- 5: zweiter Endabschnitt Stößel
- 6: Fixierelement, Vakuumsauger
- 7: Druckkammer
- 8: Druckleitung
- 9: Proportionalventil
- 10: Axialbohrung Stößel
- 11: radiale Bohrung(en)
- 12: aufgeweiteter Ringraum
- 13: Vakuumkanal
- 14: Vakuumpumpe
- 15: Luftlager
- 16: Hubweg Stößel
- 17: Stößelpositionserkennung
- 18: Sensor
- 19: Stellzylinder
- 20: Haltesystem
- 21: Vakuumsammelkanal
- 22: Auslegerarm
- 23: Antriebseinheit
- 24: Trägerplatte
- 25: zylindrische Bohrung
- 26: Luftlagerversorgungskanal
- S₁..S₃: Schnittabstand

## Patentansprüche

1. Haltevorrichtung (1), insbesondere zum Fixieren eines Glassubstrates während eines Schneidprozesses, umfassend ein Gehäuse (2) und einen gegenüber dem Gehäuse (2) in seiner axialen Richtung verschiebbar gelagerten Stößel (3) mit einem ersten und einem zweiten Endabschnitt (4, 5), wobei der erste Endabschnitt (4) aus dem Gehäuse (2) herausragt und einen Vakuumsauger (6) aufweist,
**dadurch gekennzeichnet,**
**dass** der Stößel (3) gasgefedert in dem Gehäuse (2) gelagert ist.

2. Vorrichtung nach Anspruch 1, **dadurch gekennzeichnet, dass** in dem Gehäuse (2) eine mit einem Druckmedium beaufschlagbare Druckkammer (7) ausgebildet ist und das Druckmedium auf den zweiten Endabschnitt (5) des Stößels (3) wirkt.

3. Vorrichtung nach Anspruch 1 oder 2, **dadurch gekennzeichnet, dass** die Druckkammer (7) mit einer Druckleitung (8) verbunden und in der Druckleitung (8) ein Proportionalventil (9) angeordnet ist.

4. Vorrichtung nach einem der Ansprüche 1 bis 3, **dadurch gekennzeichnet, dass** der Stößel (3) eine in den Vakuumsauger (6) mündende Axialbohrung (10) und die Axialbohrung (10) mindestens eine radiale Bohrung (11) aufweist, wobei in dem Gehäuse (2) der mindestens einen radialen Bohrung (11) gegenüberstehend ein aufgeweiteter Ringraum (12) ausgebildet und der Ringraum (12) mit einem Vakuumkanal (13) verbunden ist.

5. Vorrichtung nach Anspruch 4, **dadurch gekennzeichnet, dass** der Vakuumkanal (13) an eine Vakuumpumpe (14) angeschlossen ist.

6. Vorrichtung nach einem der Ansprüche 1 bis 5, **dadurch gekennzeichnet, dass** der Stößel (3) gegenüber dem Gehäuse (2) mit einem Luftlager (15) gelagert ist.

7. Vorrichtung nach Anspruch 6, **dadurch gekennzeichnet, dass** das Luftlager (15) über eine eigene Druckluftversorgung beaufschlagt ist.

8. Vorrichtung nach Anspruch 6 oder 7, **dadurch gekennzeichnet, dass** das Luftlager (15) mit einer Seite an die Druckkammer (7) angrenzt.

9. Vorrichtung nach einem der Ansprüche 6 bis 8, **dadurch gekennzeichnet, dass** das Luftlager (15) eine größere axiale Länge aufweist als der Hubweg (16) des Stößels (3).

10. Vorrichtung nach einem der Ansprüche 1 bis 9, **dadurch gekennzeichnet, dass** die Position des Stößels (3) über eine Stößelpositionserkennung (17) erfasst ist.

11. Vorrichtung nach Anspruch 10, **dadurch gekennzeichnet, dass** die Stößelpositionserkennung (17) einen in der Druckkammer (7) angeordneten Sensor (18) umfasst, welcher den zweiten Endabschnitt (5) des Stößels (3) detektiert.

12. Vorrichtung nach einem der Ansprüche 1 bis 11, **dadurch gekennzeichnet, dass** in dem Gehäuse (2) quer zur axialen Ausrichtung des Stößels (3) ein Stellzylinder (19) angeordnet ist, welcher in einer ausgefahrenen Position an den Stößel (3) angreift.

## Claims

1. Holding apparatus (1), in particular for fixing a glass substrate during a cutting process, comprising a housing (2) and a plunger (3), which is mounted such that it can be displaced with respect to the housing (2) in its axial direction and has a first and a second end portion (4, 5), the first end portion (4) projecting out of the housing (2) and having a vacuum sucker (6),
**characterized**
**in that** the plunger (3) is gas-sprung in the housing (2).

2. Apparatus according to Claim 1, **characterized in that** a pressure chamber (7) which can be subjected to the action of a pressure medium is formed in the housing (2), and the pressure medium acts on the second end portion (5) of the plunger (3).

3. Apparatus according to Claim 1 or 2, **characterized in that** the pressure chamber (7) is connected to a pressure line (8), and a proportional valve (9) is arranged in the pressure line (8).

4. Apparatus according to one of Claims 1 to 3, **characterized in that** the plunger (3) has an axial bore (10) which opens out into the vacuum sucker (6), and the axial bore (10) has at least one radial bore (11), wherein a widened annular space (12) is formed in the housing (2) such that it faces the at least one radial bore (11), and the annular space (12) is connected to a vacuum duct (13).

5. Apparatus according to Claim 4, **characterized in that** the vacuum duct (13) is connected to a vacuum pump (14).

6. Apparatus according to one of Claims 1 to 5, **characterized in that** the plunger (3) is supported by an air bearing (15) with respect to the housing (2).

7. Apparatus according to Claim 6, **characterized in that** the air bearing (15) is acted upon via a dedicated supply of compressed air.

8. Apparatus according to Claim 6 or 7, **characterized in that** one end of the air bearing (15) adjoins the pressure chamber (7).

9. Apparatus according to one of Claims 6 to 8, **characterized in that** the air bearing (15) has a greater axial length than the stroke travel (16) of the plunger (3).

10. Apparatus according to one of Claims 1 to 9, **characterized in that** the position of the plunger (3) is detected via a plunger position detection means (17).

11. Apparatus according to Claim 10, **characterized in that** the plunger position detection means (17) comprises a sensor (18) which is arranged in the pressure chamber (7) and detects the second end portion (5) of the plunger (3).

12. Apparatus according to one of Claims 1 to 11, **characterized in that** an actuating cylinder (19), which acts on the plunger (3) when in an extended position, is arranged in the housing (2) transversely with respect to the axial orientation of the plunger (3).

## Revendications

1. Dispositif de retenue (1), en particulier pour la fixation d'un substrat de verre pendant une opération de coupe, comprenant un boîtier (2) et un poussoir (3) pouvant coulisser dans sa direction axiale par rapport au boîtier (2), avec un premier et un deuxième segments d'extrémité (4, 5), dans lequel le premier segment d'extrémité (4) sort hors du boîtier (2) et présente une ventouse aspirante (6),
**caractérisé en ce que**
le poussoir (3) est monté sur un amortisseur pneumatique dans le boîtier (2).

2. Dispositif selon la revendication 1, **caractérisé en ce qu'**une chambre de pression (7), pouvant être alimentée en fluide sous pression, est formée dans le boîtier (2) et le fluide sous pression agit sur le deuxième segment d'extrémité (5) du poussoir (3).

3. Dispositif selon la revendication 1 ou 2, **caractérisé en ce que** la chambre de pression (7) est raccordée à une conduite sous pression (8) et une soupape proportionnelle (9) est disposée dans la conduite sous pression (8).

4. Dispositif selon l'une quelconque des revendications 1 à 3, **caractérisé en ce que** le poussoir (3) présente un alésage axial (10) débouchant dans la ventouse aspirante (6) et l'alésage axial (10) présente au moins un alésage radial (11), dans lequel une chambre annulaire élargie (12) est formée dans le boîtier (2) en face dudit au moins un alésage radial (11) et la chambre annulaire (12) est raccordée à un canal à vide (13).

5. Dispositif selon la revendication 4, **caractérisé en ce que** le canal à vide (13) est raccordé à une pompe à vide (14).

6. Dispositif selon l'une quelconque des revendications 1 à 5, **caractérisé en ce que** le poussoir (3) est monté avec un palier d'air (15) par rapport au boîtier (2).

7. Dispositif selon la revendication 6, **caractérisé en ce que** le palier d'air (15) est alimenté par une source d'air comprimé séparée.

8. Dispositif selon la revendication 6 ou 7, **caractérisé en ce que** le palier d'air (15) est adjacent par un côté à la chambre sous pression (7).

9. Dispositif selon l'une quelconque des revendications 6 à 8, **caractérisé en ce que** le palier d'air (15) présente une longueur axiale plus grande que la course (16) du poussoir (3).

10. Dispositif selon l'une quelconque des revendications 1 à 9, **caractérisé en ce que** la position du poussoir (3) est détectée au moyen d'une reconnaissance de la position du poussoir (17).

11. Dispositif selon la revendication 10, **caractérisé en ce que** la reconnaissance de la position du poussoir (17) comprend un capteur (18) disposé dans la chambre sous pression (7), qui détecte le second segment d'extrémité (5) du poussoir (3).

12. Dispositif selon l'une quelconque des revendications 1 à 11, **caractérisé en ce qu'**un cylindre de réglage (19) est disposé dans le boîtier (2), transversalement à l'orientation axiale du poussoir (3), lequel agit sur le poussoir (3) dans une position étendue.
